# FASCICULE DE BREVET EUROPEEN

(11) **EP 3 326 466 B1**
(45) Date de publication et mention de la délivrance du brevet: **02.09.2020**
(21) Numéro de dépôt: 17203227.8
(22) Date de dépôt: 23.11.2017
(51) Int. Cl.: A01N 59/16, A01P 1/00, A01N 25/10, A01N 25/12

(54) **MATERIAU CELLULOSIQUE ANTIMICROBIEN**
ANTIMIKROBIELLES ZELLULOSEMATERIAL
ANTIMICROBIAL CELLULOSIC MATERIAL

(30) Priorité: 25.11.2016 FR 1661510
(43) Date de publication de la demande: 30.05.2018
(73) Titulaire: Commissariat à l'Energie Atomique et aux Energies Alternatives, 75015 Paris (FR); Université Grenoble Alpes, 38400 Saint-Martin-d'Hères (FR)
(72) Inventeur: AUGER, Aurélien, 38000 GRENOBLE (FR); BOUTRY, Delphine, 38740 VINAY (FR); EYMARD-VERNAIN, Elise, 38500 VOIRON (FR); GUIOT, Arnaud, 38120 SAINT EGREVE (FR); LELONG, Cécile, 38410 SAINT MARTIN D'URIAGE (FR)
(74) Mandataire: Nony

(56) Documents cités:
- EP-A1- 2 230 321
- AMINI ELAHE ET AL: "Silver-nanoparticle-impregnated cellulose nanofiber coating for packaging paper", CELLULOSE, SPRINGER NETHERLANDS, NETHERLANDS, vol. 23, no. 1, 9 janvier 2016 (2016-01-09), pages 557-570, XP035904021, ISSN: 0969-0239, DOI: 10.1007/S10570-015-0846-1 [extrait le 2016-01-09]
- XUEZHU XU ET AL: "Cellulose Nanocrystals vs. Cellulose Nanofibrils: A Comparative Study on Their Microstructures and Effects as Polymer Reinforcing Agents", ACS APPLIED MATERIALS AND INTERFACES, vol. 5, no. 8, 24 avril 2013 (2013-04-24), pages 2999-3009, XP055360310, US ISSN: 1944-8244, DOI: 10.1021/am302624t

## Description

La présente invention se rapporte à l'utilisation comme matériau antimicrobien de nanocellulose fibrillée semi-cristalline à laquelle sont fixées par irradiation micro-onde des nanoparticules d'argent, en particulier pour une application dans le domaine de l'agroalimentaire.

Depuis plusieurs années, les scientifiques comme les industriels développent des matériaux issus de la biomasse végétale, voire bio-inspirés, à titre d'alternatives aux produits pétroliers. A ce titre, la nanocellulose s'avère être un matériau de grand intérêt étant donné qu'elle est issue de ressources naturelles renouvelables, qu'elle est biodégradable, recyclable et neutre en carbone.

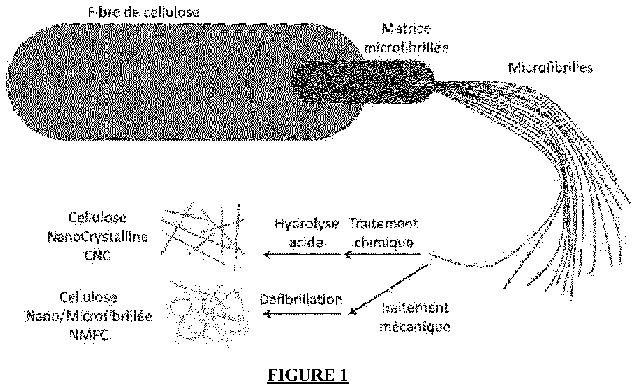

Issue de la cellulose, la nanocellulose existe sous deux formes : les MicroFibrilles de Cellulose (MFC) semi-cristallines et/ou NanoFibrilles de Cellulose (NFC) d'une part, et les NanoCristaux de Cellulose ou (NCC ou CNC) cristallins d'autre part. Les MFC et/ou NFC, encore nommées NMFC, sont obtenues par traitement mécanique, tandis que c'est un procédé chimique qui conduit à la formation des NCC. La figure 1 illustre ces deux types de nanocellulose. Elles se distinguent en particulier de par leur microstructure, ainsi que rapporté dans l'article Xuezhu *et al.* [1].

De manière avantageuse, la nanocellulose, notamment semi-cristalline, permet d'apporter une propriété d'imperméabilité, en particulier à l'eau, de par sa partie cristalline, et une propriété barrière à l'oxygène de par sa partie amorphe. Ces propriétés barrières sont d'autant plus intéressantes lorsque la partie amorphe possède peu de fraction de volume libre et une densité cohésive importante.

Ces propriétés de la nanocellulose sont notamment exploitées dans le domaine alimentaire. Ainsi, certains papiers et/ou films, notamment à base de cellulose, dédiés au domaine de l'alimentation, peuvent être recouverts d'une fine couche de nanocellulose pour assurer un effet barrière contre la diffusion de l'oxygène par exemple.

A ces propriétés d'imperméabilité à l'eau et d'effet barrière à l'oxygène, il est également souhaitable que les papiers et/ou films alimentaires puissent être dotés de propriétés antibactériennes, de manière à permettre une conservation à plus long terme des aliments contenus dans ces emballages.

Dans cette optique, il a déjà été proposé d'associer à des matériaux cellulosiques, des agents antibactériens.

Par exemple, on peut citer le document Saini *et al.* [2] qui propose de fonctionnaliser chimiquement des nanofibres de cellulose par un peptide antibactérien, la nisine.

Il a également déjà été proposé de mettre en œuvre des nanoparticules d'argent, connues pour leurs propriétés bactéricides.

Par exemple, Hinkov *et al.* [3] proposent d'intégrer des nanoparticules d'argent synthétisées par voie micro-onde dans des feuilles de cellulose pour des applications agroalimentaires.

On peut également citer Berndt *et al.* [4] qui proposent de préparer des hybrides poreux antimicrobiens dans le domaine médical, consistant en de la nanocellulose bactérienne sur laquelle sont immobilisées des nanoparticules d'argent. Toutefois, l'immobilisation des nanoparticules d'argent à la nanocellulose bactérienne implique une modification chimique de la nanocellulose par des groupes amine *via* la mise en œuvre de N,N'-carbonyldiimidazole. Par ailleurs, le procédé de préparation de la nanocellulose modifiée requiert plusieurs étapes de synthèse chimique, est long et nécessite la mise en œuvre de solvant DMSO.

Quant à Amini *et al.* [5], ils proposent un revêtement antimicrobien obtenu à partir du mélange de nanoparticules d'argent et de nanofibres de cellulose pour des papiers d'emballage. La nanocellulose ainsi imprégnée avec les nanoparticules d'argent est ensuite déposée par filtration sur du papier. Toutefois, un tel procédé pose des problèmes de contrôle et de reproductibilité, du fait notamment de l'absence d'affinité entre les nanofibrilles de cellulose et l'argent.

Toujours dans le cadre de la mise en œuvre de nanoparticules métalliques à des fins antibactériennes, on peut encore citer le document EP 2 230 321 qui vise un procédé de préparation de nanoparticules métalliques sur un support de type biopolymère, ledit biopolymère pouvant être de la cellulose microcristalline. Le document CN 101 811 664 propose quant à lui une méthode de préparation d'un matériau nanocomposite argent/cellulose à base de cellulose microcristalline. Aucun de ces documents n'a trait à la préparation de microfibrilles de cellulose semi-cristallines et/ou de nanofibrilles de cellulose semi-cristallines visées dans le cadre de la présente invention.

La présente invention propose un nouveau matériau cellulosique antibactérien à base de cellulose nano et/ou micro-fibrillée semi-cristalline dont la production est aisée et présentant une bonne efficacité antibactérienne.

Plus particulièrement, elle concerne, selon un premier de ses aspects, l'utilisation, comme matériau antimicrobien, de cellulose nano et/ou micro-fibrillée semi-cristalline à laquelle sont fixées des nanoparticules d'argent, lesdites nanoparticules d'argent étant présentes en une quantité massique strictement supérieure à 1 % et strictement inférieure à 20 % par rapport à la masse totale de ladite cellulose,
ledit matériau étant obtenu par un procédé comprenant au moins une étape d'irradiation aux micro-ondes d'une dispersion aqueuse de cellulose nano et/ou micro-fibrillée semi-cristalline supplémentée avec au moins un sel d'argent, en présence d'un agent réducteur.

Dans la suite du texte, on désigne le matériau antimicrobien selon l'invention formé de cellulose nano et/ou micro-fibrillée semi-cristalline à laquelle sont fixées (ancrées) des nanoparticules d'argent, sous la dénomination « matériau cellulosique antimicrobien ».

Les inventeurs ont ainsi constaté qu'il est possible de formuler un matériau à base de cellulose nano et/ou micro-fibrillée semi-cristalline doté de bonnes propriétés antimicrobiennes, en particulier antibactériennes, *via* l'ancrage de nanoparticules d'argent par un procédé mettant en œuvre une irradiation aux micro-ondes.

De manière avantageuse, dans le matériau cellulosique antimicrobien de l'invention, les nanoparticules d'argent sont immobilisées de manière stable et homogène sur les microfibrilles et/ou nanofibrilles de cellulose, ladite cellulose n'étant pas modifiée chimiquement ou structurellement.

De fait, la nanocellulose sur laquelle sont ancrées les nanoparticules d'argent, mise en œuvre en tant que matériau antimicrobien selon l'invention, est préparée par un procédé n'induisant aucune transformation ou modification chimique et/ou structurelle de la nanocellulose. Le procédé de préparation du matériau antimicrobien est efficace, rapide, peu coûteux, sans contrainte ou conditions extrêmes.

Plus particulièrement, dans le matériau antimicrobien selon l'invention, les nanoparticules d'argent sont immobilisées au niveau desdites micro fibrilles ou nanofibrilles de cellulose *via* des forces électrostatiques, des phénomènes de complexation et des liaisons hydrogènes, et y sont fixées de manière pérenne.

La mise en œuvre d'un traitement aux micro-ondes pour préparer le matériau antimicrobien selon l'invention permet avantageusement d'augmenter les énergies de liaison (« binding energy »), et d'améliorer également la cristallisation des nanoparticules d'argent formées *in situ.*

Une fois l'immobilisation stabilisée en milieu aqueux, l'étape d'irradiation aux micro-ondes permet une accroche permanente des nanoparticules d'argent à la nanocellulose. Un réseau nanocellulosique 3D est ainsi formé qui emprisonne les nanoparticules d'argent. De cette façon, les nanoparticules d'argent se retrouvent en surface et en profondeur de la nanocellulose.

L'étape d'irradiation aux micro-ondes s'avère ainsi essentielle pour assurer une accroche permanente des nanoparticules d'argent sur les fibres de NMFC.

De plus, cette méthode de préparation permet d'obtenir des particules d'argent de tailles nanométriques : la précipitation des espèces inorganiques étant quasi-instantanée dans l'eau en conditions hydrothermales, des temps de réaction extrêmement courts peuvent être mis en œuvre, ce qui permet de limiter la croissance des nanoparticules.

Par ailleurs, ce procédé de préparation permet d'atteindre des faibles taux de défauts cristallins. En effet, du fait des températures et pressions élevées, la présence de défauts cristallins dans les matériaux ainsi mis en œuvre est très rarement observée, contrairement aux techniques de synthèse classiques.

D'autre part, comme illustré dans les exemples qui suivent, la nanocellulose à laquelle sont fixées selon le procédé de l'invention des nanoparticules d'argent présente d'excellentes propriétés antimicrobiennes, en particulier antibactériennes, à la fois vis-à-vis des bactéries de type Gram positif et des bactéries de type Gram négatif.

Sans vouloir être lié par la théorie, le matériau cellulosique antibactérien selon l'invention est apte à libérer des ions Ag⁺ lorsque le matériau est mis en contact avec des bactéries, sans relargage des nanoparticules d'argent.

Le matériau antimicrobien selon l'invention peut ainsi être mis en œuvre pour de nombreuses applications, en particulier pour conférer aux emballages utilisés dans l'industrie agroalimentaire des propriétés antibactériennes.

Plus particulièrement, le matériau cellulosique antimicrobien selon l'invention peut être mis en œuvre pour former tout ou partie d'un film ou revêtement antimicrobien, en particulier à la surface d'un substrat, ledit substrat étant plus particulièrement un film, notamment de nature cellulosique, tel qu'un film alimentaire. Un tel revêtement permet de garantir un effet antibactérien.

Selon un autre de ses aspects, la présente invention concerne une composition antimicrobienne comprenant, au moins :
- de la cellulose nano et/ou micro-fibrillée semi-cristalline à laquelle sont fixées des nanoparticules d'argent en une teneur massique strictement supérieure à 1 % et strictement inférieure à 20 % par rapport à la masse totale de ladite cellulose, obtenue selon le procédé défini précédemment ; et
- au moins un composé, dit renfort mécanique, apte à améliorer les propriétés mécaniques d'un revêtement formé à partir de ladite composition.

Comme détaillé dans la suite du texte, la composition antimicrobienne peut être, soit déposée en voie aqueuse à la surface d'un substrat selon des méthodes connues de l'homme du métier, par exemple par pulvérisation, soit utilisée en voie solide, par exemple sous forme de revêtement ou film autosupporté.

Un autre objet de l'invention est ainsi un film ou revêtement antimicrobien formé à partir d'une composition antimicrobienne telle que définie précédemment.

Encore un autre objet de l'invention est un procédé de préparation d'un film ou revêtement antimicrobien tel que défini précédemment, caractérisé en ce qu'il comprend au moins une étape (a) d'application en voie aqueuse d'une composition telle que définie précédemment à la surface d'un substrat et une étape (b) de séchage propice à l'évaporation du ou desdits solvants aqueux.

L'invention concerne encore, selon un autre de ses aspects, un procédé utile pour conférer des propriétés antimicrobiennes, en particulier antibactériennes, à un substrat, en particulier un film ou papier, notamment de nature cellulosique, comprenant l'application en surface dudit substrat d'un film ou revêtement antimicrobien selon l'invention ou tel qu'obtenu selon le procédé défini précédemment.

Selon encore un autre de ses aspects, elle concerne un article, notamment pour l'agroalimentaire, tel qu'un film alimentaire, comprenant un substrat revêtu d'au moins un film ou revêtement antimicrobien selon l'invention ou obtenu selon le procédé défini précédemment.

D'autres caractéristiques, variantes et avantages du matériau cellulosique antimicrobien selon l'invention et de son utilisation ressortiront mieux à la lecture de la description, des exemples et des figures qui suivent, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

### MATERIAU ANTIMICROBIEN

Comme indiqué précédemment, le matériau cellulosique antimicrobien selon l'invention est formé de cellulose nano et/ou micro-fibrillée semi-cristalline sur laquelle sont fixées (ancrées) par micro-onde des nanoparticules d'argent.

Par « cellulose nano et/ou microfibrillée semi-cristalline », on entend désigner la cellulose sous forme de nanofibrilles et/ou de microfibrilles de cellulose semi-cristalline.

On désignera plus simplement, dans la suite du texte, la cellulose semi-cristalline nano et/ou microfibrillée, par les appelations « nanocellulose » ou « NMFC ».

Dans le cadre de la présente invention, lorsque le terme « cellulose » est employé, il s'agit de tout type de cellulose provenant de toute source connue de l'homme de l'art. Autrement dit, toute source de matière brute de cellulose peut être utilisée dans le cadre de la présente invention, que ce soit pour la préparation des nanofibres de cellulose ou encore des films de cellulose pouvant être utilisés à titre de substrat à revêtir par une couche mince de nanocellulose, comme exposé ci-après. La matière première peut provenir de tout matériel végétal qui contient de la cellulose. Le matériel végétal peut être du bois. Le bois peut provenir d'arbres résineux comme l'épinette, le pin, le sapin, le mélèze, douglas ou la pruche, ou d'arbre de bois dur comme le bouleau, le tremble, le peuplier, l'aulne, d'eucalyptus ou de l'acacia, ou d'un mélange de résineux et de feuillus. Le matériel végétal peut également provenir de résidus agricoles, de graminées ou d'autres substances végétales telles que la paille, des feuilles, de l'écorce, des graines, des coques, des fleurs, des légumes ou des fruits de coton, le maïs, le blé, l'avoine, le seigle, l'orge, le riz, le lin, le chanvre, le chanvre de Manille, le sisal, le jute, ramie, kenaf, la bagasse, le bambou ou de roseau.

Le terme « pâte de cellulose » se réfère à des fibres de cellulose qui sont isolées de toute matière première cellulosique par des procédés connus de l'homme de l'art. Typiquement, le diamètre des fibres avant tout traitement dans le cadre de la préparation de nanocellulose varie entre 10 à 30 µm et la longueur des fibres dépasse 500 µm.

Les micro fibrilles de cellulose semi-cristallines et/ou les nanofibrilles de cellulose semi-cristallines (NMFC) considérées dans le cadre de la présente invention sont classiquement obtenues par transformation mécanique des films de cellulose, par contraste avec les nanocristaux de cellulose ou nanocellulose cristalline (NCC), non considérés dans le cadre de la présente invention, qui sont obtenus par transformation chimique des fibres de cellulose.

Les microfibrilles de cellulose semi-cristallines et/ou nanofibrilles de cellulose semi-cristallines (NMFC) considérées dans le cadre de la présente invention peuvent être obtenues selon tout procédé connu de l'homme de l'art.

Les NMFC présentent en général des longueurs de fibres pouvant être comprises entre 0,5 et 100 µm, en particulier entre 1 et 50 µm, par exemple entre 5 et 10 µm. Elles présentent par ailleurs en général un diamètre compris entre 1 et 100 nm, en particulier entre 5 et 50 nm, par exemple entre 10 et 30 nm.

Ces dimensions sont variables et peuvent notamment être fonction de la pâte de cellulose employée ou encore de la méthode de désintégration utilisée.

Comme évoqué précédemment, le matériau antibactérien selon l'invention est caractérisé par la présence de nanoparticules d'argent fixées à la nanocellulose.

Les nanoparticules d'argent sont présentes en une quantité strictement supérieure à 1 % en masse et strictement inférieure à 20 % en masse par rapport à la masse totale de ladite nanocellulose.

On entend par « masse totale » de la nanocellulose, la masse sèche de cellulose nano et/ou micro-fibrillée semi-cristalline, c'est-à-dire la masse de cellulose nano et/ou micro-fibrillée semi-cristalline exempte d'eau.

De préférence, la quantité massique de nanoparticules d'argent du matériau antimicrobien selon l'invention est supérieure ou égale à 2 % par rapport à la masse totale de nanocellulose. De préférence, elle est inférieure ou égale à 15 % en masse.

Selon un mode de réalisation particulier, la quantité massique de nanoparticules d'argent du matériau antimicrobien selon l'invention est comprise entre 2 et 10 % en masse, en particulier entre 2 et 8 % en masse, et plus particulièrement entre 2 et 5 % en masse, par rapport à la masse totale de nanocellulose.

Par « nanoparticules », on entend des particules solides de tailles nanométriques, c'est-à-dire dont au moins une des dimensions est nanométrique (et de préférence toutes), c'est-à-dire inférieure au micromètre. Les nanoparticules d'argent peuvent plus particulièrement présenter une taille comprise entre 20 et 200 nm, en particulier entre 50 et 150 nm, et plus particulièrement d'environ 100 nm. La taille peut être évaluée par microscopie électronique à balayage (MEB).

### Préparation du matériau cellulosique antimicrobien

Comme indiqué précédemment, le matériau antimicrobien selon l'invention est obtenu *via* un procédé mettant en œuvre une étape d'irradiation aux micro-ondes d'une dispersion aqueuse de cellulose nano et/ou micro-fibrillée semi-cristalline supplémentée avec au moins un sel d'argent, en présence d'un agent réducteur.

Selon le procédé mis en œuvre selon l'invention, les nanoparticules d'argent d(0) sont synthétisées *in situ* et liées aux micro fibrilles ou nanofibrilles de cellulose *via* des liaisons faibles (Van der Waals, ponts hydrogène et électrostatiques).

Le procédé selon la présente invention peut en particulier comprendre les étapes suivantes consistant à :
(i) disposer d'une dispersion aqueuse de cellulose nano et/ou micro-fibrillée semi-cristalline ;
(ii) ajouter au moins un sel d'argent sous agitation jusqu'à dissolution totale dudit sel d'argent ;
(iii) ajouter un agent réducteur au mélange ainsi obtenu ; et
(iv) soumettre ledit mélange à une irradiation aux micro-ondes dans des conditions propices à la fixation desdites nanoparticules d'argent sur la cellulose nano et/ou micro-fibrillée.

Les étapes (i) à (iv) peuvent être effectuées dans les conditions opératoires suivantes.

Les nanofibrilles ou micro fibrilles de cellulose mises en œuvre sont dispersibles dans l'eau.

Selon un mode de réalisation particulier, la teneur en cellulose nano et/ou micro-fibrillée dans la dispersion aqueuse est comprise entre 1 et 5 % en masse, en particulier entre 2 et 4 % en masse, et encore plus particulièrement entre 2 et 3 % en masse, par rapport à la masse totale de la dispersion aqueuse.

A titre de sel d'argent, qui joue le rôle de précurseur, pouvant être utilisé dans le cadre de la présente invention, on peut notamment citer AgNO₃.

Bien entendu, il appartient aux compétences de l'homme du métier d'ajuster la quantité en sel d'argent introduit en étape (ii) de manière à obtenir la teneur souhaitée en argent dans le matériau antimicrobien selon l'invention.

Sans vouloir être lié par la théorie, lors de l'ajout en étape (ii) du sel d'argent, la molécule de cellulose, possédant des groupements OH en périphérie de la structure d'ose, permet la complexation des ions argent et la formation de liaisons de type cellulose-O-Ag.

L'étape (iii) permet de réduire les ions argent à l'aide d'un agent réducteur. Cette étape permet la formation et l'accroche de nanoparticules d'argent d(0) sur les micro- et nanofibrilles de cellulose *via* des forces électrostatiques, le phénomène de complexation et la formation d'autres ponts hydrogène.

Des agglomérats métalliques d'argent d(0) sont ainsi obtenus.

A titre d'agent réducteur, on peut citer par exemple l'hydrazine, la N,N-diéthylhydroxylamine, l'urée, la thiourée et leurs mélanges.

Il est entendu que l'agent réducteur ne se retrouve pas dans le matériau cellulosique antimicrobien final.

L'étape (iv) d'irradiation aux micro-ondes permet d'apporter une énergie de cristallisation des agglomérats d'argent (d0) pour obtenir des nanoparticules d'argent (d0) cristallisées qui vont être stables dans le temps.

Autrement dit, les agglomérats de nanoparticules d'argent cristallines d(0) sont initiés par agitation et réduction, puis l'étape de micro-onde permet de les cristalliser. Les nanoparticules d'argent ainsi formées *in situ* sont indissociables de la nanocellulose.

Le procédé de l'invention mettant en œuvre une irradiation aux micro-ondes permet de fixer les nanoparticules d'argent sur les fibres de NMFC. Il permet également une répartition homogène des nanoparticules d'argent sur la cellulose nano et/ou micro-fibrillée semi-cristalline.

L'homme du métier est à même d'ajuster les conditions de l'irradiation aux micro-ondes pour obtenir une accroche permanente des nanoparticules d'argent sur les fibres de nanocellulose.

A l'issue de l'irradiation aux micro-ondes, les nanoparticules d'argent demeurent ainsi indissociables de la cellulose nano et/ou micro-fibrillée.

En particulier, l'irradiation aux micro-ondes peut présenter une énergie comprise entre 200 et 1000 W, en particulier entre 350 et 850 W, par exemple entre 500 et 750 W.

La durée de soumission à l'irradiation aux micro-ondes peut être comprise entre 0,5 et 10 minutes, en particulier entre 1 et 5 minutes et plus particulièrement entre 1 et 2 minutes.

Comme évoqué précédemment, à l'issue de ce procédé, un matériau cellulosique auquel sont ancrées de manière permanente en surface et en profondeur des nanoparticules d'argent est obtenu.

### APPLICATION

Le matériau cellulosique antimicrobien selon l'invention trouve une application particulièrement intéressante dans le domaine de l'industrie agroalimentaire.

L'invention concerne ainsi plus particulièrement un matériau antimicrobien pour un objet matériel et inerte.

On entend ici par "objet matériel inerte", un objet en matériaux inertes, c'est-à-dire de la matière non vivante ou non biologique ou non issue de matière vivante ou biologique.

Le matériau antimicrobien selon l'invention peut être plus particulièrement mis en œuvre pour former tout ou partie d'un film ou revêtement antimicrobien, en particulier à la surface d'un substrat tel qu'un film alimentaire de nature cellulosique.

Un tel film ou revêtement antimicrobien combine avantageusement les propriétés inhérentes à la nanocellulose, à savoir une imperméabilité à l'eau et une propriété barrière à l'oxygène, avec de bonnes propriétés antimicrobiennes.

Par film ou revêtement « antimicrobien », on entend signifier que la surface externe du substrat sur lequel est appliqué le film ou revêtement selon l'invention est active contre les microbes pour empêcher le développement et la propagation desdits microbes par contact avec la surface dudit substrat.

Comme illustré dans les exemples qui suivent, le matériau antimicrobien est actif à la fois vis-à-vis des bactéries de type Gram positif et de type Gram négatif.

L'invention concerne, selon un autre de ses aspects, une composition antimicrobienne, en particulier antibactérienne, comprenant, dans un milieu aqueux, au moins :
- un matériau cellulosique antimicrobien selon l'invention obtenu par un procédé tel que décrit précédemment ; et
- au moins un composé, dit renfort mécanique, apte à améliorer les propriétés mécaniques (par exemple, rigidité, résistance à l'abrasion, aux rayures et/ou à l'usure) d'un film ou revêtement formé à partir de la composition.

La composition antimicrobienne selon l'invention peut se présenter sous forme liquide, ladite composition comprenant alors un ou plusieurs solvants, en particulier aqueux, par exemple de l'eau.

Une telle composition sous forme liquide peut être directement préparée par ajout d'un ou plusieurs renforts mécaniques à la dispersion aqueuse de nanocellulose à laquelle sont fixées des nanoparticules d'argent, obtenue à l'issue du traitement micro-onde du procédé de préparation du matériau antimicrobien décrit précédemment.

Alternativement, la composition antimicrobienne peut se présenter sous forme solide (c'est-à-dire exempte de solvants). Une telle composition solide peut être par exemple obtenue après séchage d'une composition liquide, par exemple d'une dispersion aqueuse telle que décrite précédemment, pour éliminer le ou lesdits solvants aqueux.

Les composés, dits renforts mécaniques, mis en œuvre dans une composition antimicrobienne selon l'invention sont plus particulièrement de nature polymérique. Ils peuvent être par exemple choisis parmi des nanoparticules polymériques telles que des nanoparticules ou « billes » de latex, naturel ou synthétique, du polyvinylpyrrolidone (PVP), de l'alcool polyvinylique (PVA) et leurs mélanges.

Le latex peut par exemple se présenter sous la forme de particules de diamètre compris entre 100 nm et 2 µm.

Ces composés, généralement mis en œuvre pour permettre d'améliorer les propriétés mécaniques d'un film formé à partir de composés filmogènes, notamment de cellulose, sont couramment désignés sous l'appellation « renforts mécaniques ».

Ils peuvent être présents dans une teneur comprise entre 0,5 et 5 % en masse, par rapport à masse totale sèche de la composition antimicrobienne selon l'invention.

Par masse « sèche », on entend la masse de la composition exempte de solvant, en particulier exempte de solvant aqueux.

Dans le cas de la mise en œuvre, conjointement au matériau cellulosique antimicrobien selon l'invention, d'un ou plusieurs renforts mécaniques tels que décrits précédemment, la composition mise en œuvre pour former un revêtement antimicrobien comprend de préférence en outre un ou plusieurs agent(s) tensioactif(s), en particulier non-ionique(s), de manière à optimiser les propriétés antibactériennes du film ou revêtement obtenu.

L'ajout de tensioactif(s) permet notamment de favoriser la dispersion de la nanocellulose dans le cas de la mise en œuvre de la composition antimicrobienne en voie aqueuse.

Les agents tensioactifs considérés selon l'invention sont plus particulièrement des composés dits « détergents ». L'appellation « détergents » est connue en biologie et biochimie pour désigner des tensioactifs doux utilisés pour favoriser la lyse des membranes cellulaires et la dissolution du matériel intracellulaire.

De tels détergents peuvent être neutres, anioniques, cationiques ou encore zwitterioniques et sont bien connus de l'homme du métier.

De préférence, le détergent mis en œuvre est choisi parmi les détergents non-ioniques. Les détergents non-ioniques sont considérés comme des surfactants doux.

Les détergents non-ioniques de la composition antimicrobienne selon l'invention peuvent être plus particulièrement choisis parmi le Tween®80 ou polysorbate 80 (polyoxyéthylènesorbitanne-monooléate), le Tween®20 (polyoxyéthylènesorbitanne-monolaurate), le Triton® X 100 (octoxinol 10), le Pluronic®F68 (polyéthylènepolypropylène glycol), le n-dodécyl-β-D-maltoside (DDM), le 3-[(3-cholamidopropyl)diméthylammonio)-1-propane sulfonate, plus connu sous l'appellation CHAPS, et leurs mélanges.

De préférence, le détergent non ionique est un détergent de la série « Triton X », produit par polymérisation de l'octylphénol avec l'oxyde d'éthylène, plus préférentiellement le Triton® X-100 commercialisé par Union Carbide.

La composition antimicrobienne de l'invention peut être appliquée à l'état liquide (voie aqueuse) sur un substrat de base, par exemple sur un film, notamment de nature cellulosique.

En alternative, la composition antimicrobienne de l'invention peut encore être mise en œuvre, de par la présence de renforts mécaniques tels que décrits précédememnt, sous forme de produit autosupporté, en particulier sous forme d'un film antimicrobien autosupporté, permettant son utilisation à l'état solide (voie solide).

Au sens de l'invention, un produit, en particulier un film, est dit « autosupporté » lorsque, de par ses propriétés mécaniques, il acquiert une cohésion qui le rend manipulable et transportable, sans la présence d'un substrat de renfort.

Ainsi, l'invention concerne encore, selon un autre de ses objets, un film ou revêtement antimicrobien formé à partir d'une composition antimicrobienne selon l'invention.

Le film ou revêtement antimicrobien formé selon l'invention peut présenter une épaisseur comprise entre 1 et 500 µm, en particulier entre 10 et 100 µm, notamment entre 50 et 100 µm.

L'invention concerne encore un procédé de préparation d'un film ou revêtement antimicrobien tel que décrit précédemment, comprenant au moins une étape (a) d'application en voie aqueuse d'une composition antimicrobienne telle que définie précédemment à la surface d'un substrat, et une étape (b) de séchage propice à l'évaporation du ou desdits solvants aqueux.

Comme évoqué précédemment, la composition antimicrobienne mise en œuvre en voie aqueuse comprend un ou plusieurs solvants aqueux, en particulier de l'eau.

Avantageusement, il peut s'agir d'une dispersion aqueuse comprenant un matériau cellulosique antimicrobien selon l'invention, obtenue à l'issue du traitement micro-onde du procédé de préparation du matériau antimicrobien décrit précédemment, et supplémentée avec un ou plusieurs renforts mécaniques.

La composition antimicrobienne selon l'invention peut être déposée en voie aqueuse sur un substrat, par exemple en cellulose, par tout procédé industriel adapté bien connu de l'homme du métier.

De par sa taille nanométrique ou micrométrique (NMFC), la nanocellulose microfibrillée à laquelle sont ancrées les nanoparticules d'argent, utilisée selon l'invention, présente une très bonne affinité à la cellulose du substrat lors des préparations de dépôt.

Parmi ces techniques de dépôt, on peut citer le dépôt par trempage (« dip-coating » en langue anglaise), par pulvérisation, dépôt à la tournette, dépôt par nébulisation (« spray-coating » en langue anglaise), dépôt par jet d'encre, par enduction centrifuge (« spin-coating » en langue anglaise), dépôt par enduction par fente (« slot die » en langue anglaise), dépôt par imprégnation, dépôt par flux liquide (« flow-coating » en langue anglaise), dépôt au trempé ou par sérigraphie, dépôt par presse encolleuse (« size-press » en langue anglaise), par barre de couchage (« bar-coating » en langue anglaise).

De préférence, le dépôt peut être réalisé par bar-coating ou size-press.

La composition antimicrobienne selon l'invention est ainsi apte à former un revêtement (autrement dit, une couche ou un film) à la surface d'un substrat.

Plus particulièrement, le matériau antimicrobien selon l'invention peut trouver une utilité dans la préparation d'articles pour l'agroalimentaire, tels que des films agroalimentaires.

L'invention concerne ainsi un article, notamment pour l'agro-alimentaire, comprenant un substrat revêtu d'au moins un film ou revêtement antimicrobien tel que décrit précédemment.

Parmi les substrats pouvant ainsi être recouverts, on peut notamment citer les substrats de nature cellulosique, qu'il s'agisse de papiers ou de films.

Le substrat peut notamment être un article pour l'agroalimentaire, à l'image d'un film alimentaire, en particulier à base de cellulose.

L'invention va maintenant être décrite au moyen des exemples et figures suivants, donnés à titre illustratif et non limitatif de l'invention.

### FIGURES

Figure 1 : illustration des deux types connus de nanocelluloses CNC et NMFC semi-cristallines ;
Figure 2 : spectres de diffraction par rayons X obtenus pour un échantillon de nanocellulose, avant et après ancrage de nanoparticules (5 % en masse) d'argent selon le procédé de l'exemple 1 ;
Figure 3 : spectre XPS Ag 3d obtenu pour un échantillon de nanocellulose après ancrage de nanoparticules d'argent selon le procédé de l'exemple 1 ;
Figure 4 : observation de l'efficacité antibactérienne des échantillons de nanocellulose traitée selon les exemples 1 et 2, vis-à-vis des bactéries à Gram positif *(Bacillus subtilis) ;*
Figure 5 : observation de l'efficacité antibactérienne des échantillons de nanocellulose non traitée et des échantillons de nanocellulose incorporant des nanoparticules d'argent (5 % en masse) et d'or (5 % en masse), préparés selon les exemples 1 et 2, vis-à-vis des bactéries à Gram positif *(Bacillus subtilis)* et à Gram négatif *(Escherichia coli).*

### EXEMPLES

### EXEMPLE 1

### Nanocellulose fibrillée semi-cristalline incorporant des nanoparticules d'argent

La nanocellulose fibrillée (5 mL à une concentration w/v de 2,2 g/100 mL (%), soit 110 mg) est diluée dans de l'eau déionisée (30 mL) sous vive agitation. 8,7 mg d'AgNO₃ sont ajoutés à la dispersion.

Après obtention d'une dissolution totale du sel d'argent toujours sous vive agitation magnétique, 1 goutte d'hydrazine (agent réducteur fort) est ajoutée au milieu réactionnel. Un changement de couleur est observé, typique de la formation de nano-agglomérats métalliques (d⁰). La solution est ensuite transférée dans un mini-réacteur en téflon et est soumise à l'irradiation aux micro-ondes (1 minute à 750 W). Après le traitement, la dispersion de nanocellulose à laquelle sont fixées des nanoparticules d'argent (d⁰) est récupérée et directement applicable.

Suivant le même protocole, différents échantillons de nanocellulose incorporant des quantités variables de nanoparticules d'argent (pourcentages massiques en argent de 0,1 % ; 0,5 % ; 1 % ; 2 % ; 3 % ; 4 % et 20 % par rapport à la masse sèche de cellulose) ont été préparés en faisant varier la quantité de sel d'argent introduite.

### Analyse des échantillons

L'analyse des échantillons par microscopie électronique à balayage MEB (microscope LEO 1530 Electron Microscopy Ltd) et par microscopie électronique en transmission MET (OSIRIS 1, Tecnai) permet de confirmer la présence de nanoparticules d'argent réparties dans la nanocellulose.

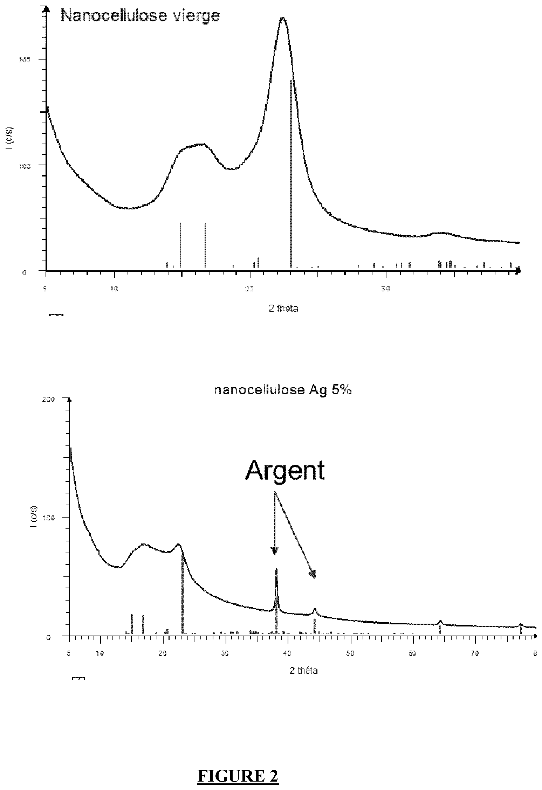

Une analyse par diffraction des rayons X (Bruker D8-Advance, source RX en cuivre) de la nanocellulose, avant et après ancrage des nanoparticules d'argent (5% en masse) selon le procédé décrit précédemment (figure 2) permet de vérifier que la nanocellulose conserve la même structure semi-cristalline avant et après fixation des nanoparticules d'argent.

Les nanoparticules d'argent sont de type cubique faces centrées.

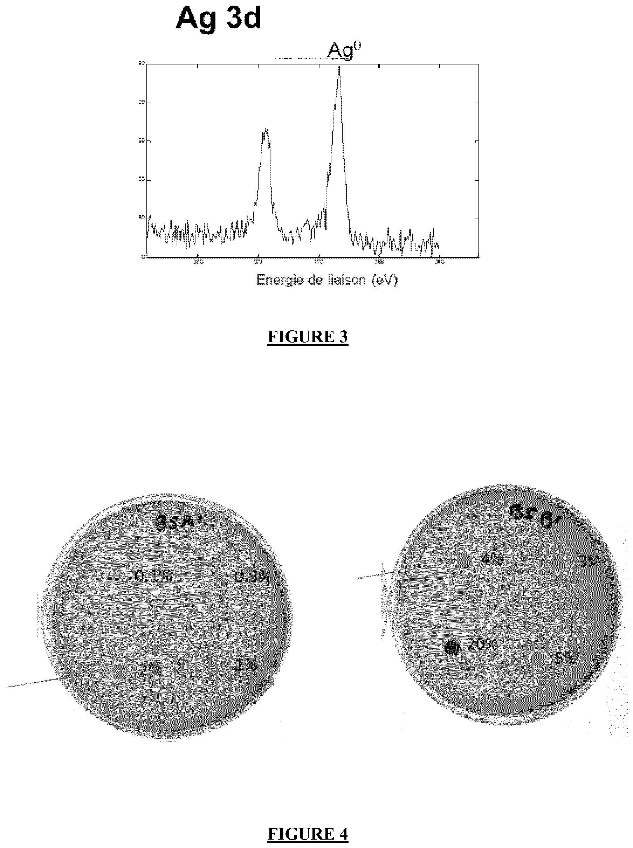

Une analyse XPS (spectrométrie de photoélectrons induits par rayons X, VersaProbe II, Phi) permet de vérifier que les nanoparticules créées dans la nanocellulose sont bien métalliques, puisque l'on détecte de l'argent « zéro » Ag⁰ (figure 3). Il n'y a plus de sel d'argent mais bien des nanoparticules métalliques d'argent.

Enfin, des observations par MEB des échantillons lors de la préparation de la nanocellulose, préalablement et ultérieurement à l'étape d'irradiation aux micro-ondes, permettent de constater une meilleure dispersion des nanoparticules d'argent dans les échantillons après irradiation aux micro-ondes. En revanche, beaucoup d'agglomérats peuvent être observés dans les matériaux n'ayant pas été soumis à une irradiation micro-onde, se situant plus particulièrement à la surface des échantillons.

### Analyse de l'efficacité antibactérienne des échantillons

L'efficacité bactériostatique a été testée sur deux types de bactéries ; des bactéries à Gram positif (*Bacillus subtilis*) et des bactéries à Gram négatif (*Escherichia coli*).

750 µL de bactéries (*Baci*/*lus subtilis* ou *Escherichia coli*) préalablement cultivées en milieu liquide riche (LB=Luria Bertani) ayant une DO₆₀₀ₘ = 0,7-0,8 sont ensemencés uniformément sur une boite de pétri (LB-agar= Luria Bertani-agar). Après 30 minutes, les échantillons solides de nanocellulose (sous forme de pastilles solides) sont déposés sur les boites de pétri ensemencées. L'ensemble est ensuite incubé à 37°C pendant 24 h à 72 h.

### Conclusion

La figure 4 est un cliché des cultures bactéries à Gram positif (*Bacillus subtilis*) observées 24 heures après le dépôt des échantillons de nanocellulose incorporant des teneurs variées en nanoparticules d'argent.

L'observation des cultures montre une zone d'inhibition (anneau clair caractéristique de l'absence de bactéries) autour des échantillons de nanocellulose incorporant 2 %, 3 %, 4 % et 5 % en masse d'argent.

Des résultats similaires sont obtenus pour les cultures de bactéries à Gram négatif (*Escherichia coli*)*.*

Ainsi, les nanocelluloses préparées selon l'invention, incorporant plus de 1 en masse de nanoparticules d'argent, agissent comme matériau antibactérien vis-à-vis des bactéries Gram positif et Gram négatif.

### EXEMPLE 2 (contre-exemple)

### Nanocellulose fibrillée semi-cristalline sur laquelle sont ancrées des nanoparticules d'or

A titre de comparatif, on prépare suivant le même protocole que celui décrit précédemment en exemple 1, de la nanocellulose incorporant des nanoparticules d'or à raison de 5 % en masse.

La nanocellulose fibrillée (5 mL à une concentration w/v de 2,2 g/100 mL (%), soit 110 mg) est diluée dans de l'eau déionisée (30 mL) sous vive agitation.. 9,5 mg d'HAuCl₄ sont ajoutés à la dispersion.

Après obtention d'une dissolution totale du sel d'or toujours sous vive agitation magnétique, 1 goutte d'hydrazine (agent réducteur fort) est ajoutée au milieu réactionnel. Un changement de couleur est observé, typique de la formation de nano-agglomérats métalliques (d⁰). La solution est ensuite transférée dans un mini-réacteur en téflon et est soumise à l'irradiation aux micro-ondes (1 minute à 750 W). Après le traitement, la dispersion de nanocellulose à laquelle sont fixées des nanoparticules d'or (d⁰) est récupérée et directement applicable.

### Analyse de l'efficacité antibactérienne

L'efficacité bactériostatique a été testée sur deux types de bactéries ; des bactéries à Gram positif (*Bacillus subtilis*) et des bactéries à Gram négatif (*Escherichia coli*), comme décrit en exemple 1.

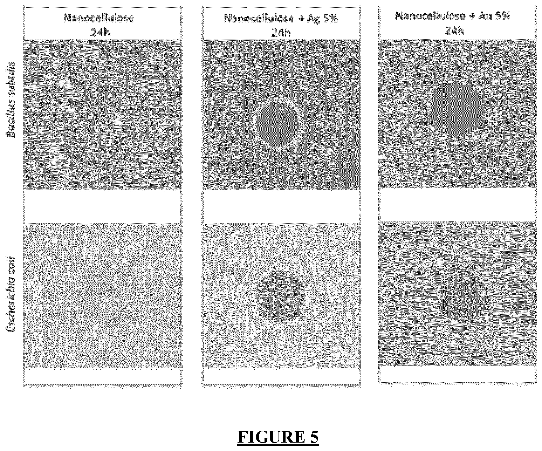

L'observation des cultures, 24 heures après introduction de la nanocellulose incorporant des nanoparticules d'or, montre l'absence de toute zone inhibition, ce qui indique qu'elle ne présente pas de propriétés antibactériennes à la différence de l'échantillon de nanocellulose incorporant une même teneur en nanoparticules d'argent (figure 5).

### EXEMPLE 3

### Compositions antibactériennes

Des compositions antibactériennes, incorporant en plus de la nanocellulose traités selon l'invention, des renforts mécaniques (PVP, PVA, billes de latex) et éventuellement un détergent (Triton® X 100), ont été préparées comme décrit ci-dessous.

Une première série d'échantillons (4 échantillons différents) est préparée par ajout, à la dispersion de nanocellulose incorporant 5 % en masse de nanoparticules d'argent, obtenue à l'issue du procédé décrit en exemple 1, de 5 % masse respectivement de polyvinylpyrolidone (PVP), d'alcool polyvinylique (PVA) ou de billes de latex de 100 nm ou de 2 µm.

Une deuxième série d'échantillons (4 échantillons différents) sont préparés par ajout, à la dispersion de nanocellulose incorporant 5 % en masse de nanoparticules d'argent, obtenue à l'issue du procédé décrit en exemple 1, de 5 % en masse de chacun des renforts décrits précédemment pour la première série d'échantillons et de 5 % en masse par rapport à la masse totale de nanocellulose, du détergent Triton® X 100.

L'efficacité antibactérienne des différentes compositions ainsi préparées a été testée sur les bactéries à Gram positif et à Gram négatif, comme décrit dans l'exemple 1 précédent.

Les compositions de la première série comprenant, en sus de la nanocellulose, des renforts mécaniques, sans ajout de Triton® X 100, montrent une efficacité antibactérienne, après 24 heures d'incubation, plus faible que celle observée pour la dispersion de nanocellulose intégrant 5 % en masse d'argent et dépourvue de renforts mécaniques. De fait, on peut observer une zone d'inhibition (anneau) autour des échantillons déposés moins transparente, signe que l'ensemble des bactéries n'a pas été détruit.

Les compositions de la deuxième série incorporant des renforts et supplémentées en Triton® X 100 montrent une efficacité antibactérienne, après 24 heures, comparable à celle observée pour la dispersion de nanocellulose intégrant 5 % en masse d'argent en l'absence de renfort mécanique. De fait, on peut observer une zone d'inhibition autour des échantillons déposés transparente ; aucune bactérie ne reste.

48 heures et 72 heures après incubation, tous les échantillons de la première et deuxième séries de nanocellulose incorporant 5 % en masse d'Ag et des renforts mécaniques, avec ou sans la présente additionnelle de détergent, montrent une zone d'inhibition transparente, et présentent ainsi une bonne activité antibactérienne.

### Références

[1] Xuezhu et al., «Cellulose Nanocrystals vs. Cellulose Nanofibrils: A comparative study on their microstructures and effects as polymer reinforcing agents », ACS Appl. Mater. Interfaces 2013, 5, 2999-3009;
[2] Saini et al. « Nisin anchored cellulose nanofibers for long term antimicrobial active food packaging », RSCAdv. 2016, 6, 12422-12430;
[3] I. Hinkov et al., "Synthèse de nanoparticules d'argent par voie micro-onde et leur integration dans des feuilles de cellulose pour des applications agroalimentaires ", Revue de génie industriel, 2011, 6, 16-22;
[4] Berndt et al. « Antimicrobial porous hybrids consisting of bacterial nanocellulose and silver nanoparticles », Cellulose 2013, 20:771-783;
[5] Amini et al. « Silver-nanoparticle-impregnated cellulose nanofiber coating for pacakging paper », Cellulose 2016, 23:557-570.

## Revendications

1. Utilisation non thérapeutique, comme matériau antimicrobien, de cellulose nano et/ou micro-fibrillée semi-cristalline à laquelle sont fixées des nanoparticules d'argent, lesdites nanoparticules d'argent étant présentes en une quantité massique strictement supérieure à 1 % et strictement inférieure à 20 % par rapport à la masse totale de ladite cellulose,
ledit matériau étant obtenu par un procédé comprenant au moins une étape d'irradiation aux micro-ondes d'une dispersion aqueuse de cellulose nano et/ou micro-fibrillée semi-cristalline supplémentée avec au moins un sel d'argent, en présence d'un agent réducteur.

2. Utilisation selon la revendication 1, **caractérisée en ce que** la quantité de nanoparticules d'argent est supérieure ou égale à 2 % en masse, en particulier inférieure ou égale à 15 % en masse, notamment comprise entre 2 et 10 % en masse, notamment entre 2 et 8 % en masse et plus particulièrement entre 2 et 5 % en masse, par rapport à la masse totale de ladite cellulose.

3. Utilisation selon la revendication 1 ou 2, **caractérisée en ce que** le sel d'argent est le nitrate d'argent (AgNO₃).

4. Utilisation selon l'une quelconque des revendications précédentes, **caractérisée en ce que** l'agent réducteur est choisi parmi l'hydrazine, la N,N-diéthylhydroxylamine, l'urée, la thiourée et leurs mélanges.

5. Utilisation selon l'une quelconque des revendications précédentes, **caractérisée en ce que** la dispersion aqueuse mise en œuvre pour préparer ledit matériau antimicrobien comprend une teneur en cellulose nano et/ou micro-fibrillée semi-cristalline comprise entre 1 et 5 % en masse, en particulier entre 2 et 4 % en masse et plus particulièrement entre 2 et 3 % en masse, par rapport à la masse totale de la dispersion aqueuse.

6. Utilisation selon l'une quelconque des revendications précédentes, **caractérisée en ce que** le procédé de préparation de la cellulose nano et/ou micro-fibrillée semi-cristalline à laquelle sont fixées des nanoparticules d'argent comprend au moins les étapes consistant à :
(i) disposer d'une dispersion aqueuse de cellulose nano et/ou micro-fibrillée semi-cristalline ;
(ii) ajouter au moins un sel d'argent sous agitation jusqu'à dissolution totale dudit sel d'argent ;
(iii) ajouter un agent réducteur au mélange ainsi obtenu ; et
(iv) soumettre ledit mélange à une irradiation aux micro-ondes dans des conditions propices à la fixation desdites nanoparticules d'argent sur la cellulose nano et/ou micro-fibrillée.

7. Utilisation selon l'une quelconque des revendications précédentes, **caractérisée en ce que** l'irradiation aux micro-ondes présente une énergie comprise entre 200 et 1000 W, en particulier entre 350 et 850 W, par exemple entre 500 et 750 W.

8. Utilisation selon l'une quelconque des revendications précédentes, **caractérisée en ce que** ladite cellulose nano et/ou micro-fibrillée semi-cristalline à laquelle sont fixées des nanoparticules d'argent forme tout ou partie d'un film ou revêtement antimicrobien, en particulier à la surface d'un substrat, ledit substrat étant notamment un film, en particulier de nature cellulosique.

9. Composition antimicrobienne comprenant au moins :
- de la cellulose nano et/ou micro-fibrillée semi-cristalline à laquelle sont fixées des nanoparticules d'argent en une teneur massique strictement supérieure à 1 % et strictement inférieure à 20 % par rapport à la masse totale de ladite cellulose, obtenue selon le procédé défini selon l'une quelconque des revendications 1 à 7 ; et
- au moins un composé, dit renfort mécanique, apte à améliorer les propriétés mécaniques d'un revêtement formé à partir de ladite composition.

10. Composition selon la revendication précédente, dans laquelle le ou lesdits renforts mécaniques sont choisis parmi des nanoparticules polymériques telles que des nanoparticules de latex, naturel ou synthétique, du polyvinylpyrrolidone (PVP), de l'alcool polyvinylique (PVA), et leurs mélanges.

11. Composition selon la revendication 9 ou 10, dans laquelle le ou lesdits renforts mécaniques sont présents en une teneur comprise entre 0,5 et 5 % en masse par rapport à la masse totale sèche de composition antimicrobienne.

12. Composition selon l'une quelconque des revendications 9 à 11, **caractérisée en ce qu'**elle comprend en outre un ou plusieurs agent(s) tensioactif(s), en particulier non-ionique(s), et plus particulièrement choisis parmi le polyoxyéthylènesorbitanne-monooléate, le polyoxyéthylènesorbitanne-monolaurate, l'octoxinol 10, le polyéthylènepolypropylène glycol, le n-dodécyl-β-D-maltoside (DDM), le 3-[(3-cholamidopropyl)diméthylammonio)-1-propane sulfonate et leurs mélanges, en particulier l'octoxinol 10.

13. Composition selon l'une quelconque des revendications 9 à 12, **caractérisée en ce qu'**elle se présente sous forme liquide, ladite composition comprenant en particulier un ou plusieurs solvants aqueux, ou sous forme solide.

14. Film ou revêtement antimicrobien formé à partir d'une composition telle que définie selon l'une quelconque des revendications 9 à 13, ledit film présentant notamment une épaisseur comprise entre 1 et 500 µm, en particulier entre 10 et 100 µm et plus particulièrement entre 50 et 100 µm.

15. Procédé de préparation d'un film ou revêtement antimicrobien tel que défini selon la revendication 14, **caractérisé en ce qu'**il comprend au moins une étape (a) d'application en voie aqueuse d'une composition telle que définie selon l'une quelconque des revendications 9 à 13 à la surface d'un substrat et une étape (b) de séchage propice à l'évaporation du ou desdits solvants aqueux, ladite composition étant plus particulièrement appliquée en étape (a) par trempage, par pulvérisation, dépôt à la tournette, dépôt par nébulisation, dépôt par jet d'encre, par enduction centrifuge, dépôt par enduction par fente, dépôt par imprégnation, dépôt par flux liquide, dépôt au trempé ou par sérigraphie, dépôt par presse encolleuse, par barre de couchage.

16. Procédé non thérapeutique utile pour conférer des propriétés antimicrobiennes à un substrat, en particulier à un film ou papier, notamment de nature cellulosique, comprenant au moins l'application en surface dudit substrat d'un film ou revêtement tel que défini selon la revendication 14 ou tel qu'obtenu selon le procédé défini en revendication 15 .

17. Article, notamment pour l'agroalimentaire, comprenant un substrat revêtu d'au moins un film ou revêtement antimicrobien tel que défini selon la revendication 14 ou tel qu'obtenu selon le procédé défini en revendication 15, ledit substrat étant plus particulièrement un film alimentaire, en particulier à base de cellulose.

## Patentansprüche

1. Nichttherapeutische Verwendung, als antimikrobielles Material, von semikristalliner Nano- und/oder mikrofibrillierter Cellulose, an der Silbernanopartikel fixiert sind, wobei die Silbernanopartikel in einer Massenmenge von strikt mehr als 1 % und strikt weniger als 20 %, bezogen auf die Gesamtmasse der Cellulose, vorliegen,
wobei das Material mit einem Verfahren erhalten wird, das mindestens einen Schritt der Mikrowellenbestrahlung einer wässrigen Dispersion von semikristalliner Nano- und/oder mikrofibrillierter Cellulose, der mindestens Silbersalz zugesetzt ist, in Gegenwart eines Reduktionsmittels umfasst.

2. Verwendung nach Anspruch 1, **dadurch gekennzeichnet, dass** die Silbernanopartikelmenge 2 Massen-% oder mehr, insbesondere 15 Massen-% oder weniger, insbesondere zwischen 2 und 10 Massen-%, insbesondere zwischen 2 und 8 Massen-% und weiter insbesondere zwischen 2 und 5 Massen-%, bezogen auf die Gesamtmasse der Cellulose, beträgt.

3. Verwendung nach Anspruch 1 oder 2, **dadurch gekennzeichnet, dass** das Silbersalz Silbernitrat (AgNO₃) ist.

4. Verwendung nach einem der vorhergehenden Ansprüche, durch gekennzeichnet, dass das Reduktionsmittel unter Hydrazin, N,N-Diethylhydroxylamin, Harnstoff, Thioharnstoff und ihren Gemischen gewählt ist.

5. Verwendung nach einem der vorhergehenden Ansprüche, **dadurch gekennzeichnet, dass** die zur Zubereitung des antimikrobiellen Materials eingesetzte wässrige Dispersion einen Gehalt an semikristalliner Nano- und/oder mikrofibrillierter Cellulose zwischen 1 und 5 Massen-%, insbesondere zwischen 2 und 4 Massen-% und weiter insbesondere zwischen 2 und 3 Massen-%, bezogen auf die Gesamtmasse der wässrigen Dispersion, umfasst.

6. Verwendung nach einem der vorhergehenden Ansprüche, **dadurch gekennzeichnet, dass** das Verfahren zur Zubereitung der semikristallinen Nano- und/oder mikrofibrillierten Cellulose, an der Silbernanopartikel fixiert sind, mindestens die Schritte umfasst, die in Folgendem bestehen:
(i) Bereitstellen einer wässrigen Dispersion von semikristalliner Nano- und/oder mikrofibrillierter Cellulose;
(ii) Zugeben mindestens eines Silbersalzes unter Rühren bis zur vollständigen Auflösung des Silbersalzes;
(iii) Zugeben eines Reduktionsmittels zu dem so erhaltenen Gemisch; und
(iv) Unterziehen des Gemisches einer Mikrowellenbestrahlung unter für die Fixierung der Silbernanopartikel an der Nano- und/oder mikrofibrillierten Cellulose günstigen Bedingungen.

7. Verwendung nach einem der vorhergehenden Ansprüche, **dadurch gekennzeichnet, dass** die Mikrowellenbestrahlung eine Energie zwischen 200 und 1000 W, insbesondere zwischen 350 und 850 W, beispielsweise zwischen 500 und 750 W aufweist.

8. Verwendung nach einem der vorhergehenden Ansprüche, **dadurch gekennzeichnet, dass** die semikristalline Nano- und/oder mikrofibrillierte Cellulose, an der Silbernanopartikel fixiert sind, einen antimikrobiellen Film oder Überzug oder einen Teil davon bildet, insbesondere an der Oberfläche eines Substrats, wobei das Substrat insbesondere ein Film ist, insbesondere ein celluloseartiger.

9. Antimikrobielle Zusammensetzung, umfassend mindestens:
- semikristalline Nano- und/oder mikrofibrillierte Cellulose, an der Silbernanopartikel in einem Massengehalt von strikt mehr als 1 % und strikt weniger als 20 %, bezogen auf die Gesamtmasse der Cellulose, fixiert sind und die nach dem in einem der Ansprüche 1 bis 7 definierten Verfahren erhalten wird; und
- mindestens eine Verbindung, mechanische Verstärkung genannt, die geeignet ist, die mechanischen Eigenschaften eines anhand der Zusammensetzung gebildeten Überzugs zu verbessern.

10. Zusammensetzung nach dem vorhergehenden Anspruch, bei der die mechanische(n) Verstärkung(en) unter polymeren Nanopartikeln wie Nanopartikeln von natürlichem oder synthetischem Latex, Polyvinylpyrrolidon (PVP), Polyvinylalkohol (PVA) und ihren Gemischen gewählt ist(sind).

11. Zusammensetzung nach Anspruch 9 oder 10, bei der die mechanische(n) Verstärkung(en) in einem Massengehalt zwischen 0,5 und 5 %, bezogen auf die Gesamttrockenmasse der antimikrobiellen Zusammensetzung, vorliegt(vorliegen).

12. Zusammensetzung nach einem der Ansprüche 9 bis 11, **dadurch gekennzeichnet, dass** sie ferner ein oder mehrere Tenside umfasst, insbesondere nichtionische und insbesondere unter Polyoxyethylensorbitanmonooleat, Polyoxyethylenesorbitanmonolaurat, Octoxinol 10, Polyethylenpolypropylenglycol, n-Dodecyl-β-D-maltosid (DDM), 3-[(3-Cholamidopropyl)dimethylammonio)-1-propansulfonat und ihren Gemischen, insbesondere Octoxinol 10, gewählte.

13. Zusammensetzung nach einem der Ansprüche 9 bis 12, **dadurch gekennzeichnet, dass** sie in flüssiger Form vorliegt, wobei die Zusammensetzung insbesondere ein oder mehrere wässrige Lösungsmittel umfasst, oder in fester Form.

14. Antimikrobieller Film oder Überzug, der anhand einer in einem der Ansprüche 9 bis 13 definierten Zusammensetzung gebildet ist, wobei der Film insbesondere eine Dicke zwischen 1 und 500 µm, insbesondere zwischen 10 und 100 µm und weiter insbesondere zwischen 50 und 100 µm aufweist.

15. Verfahren zur Zubereitung eines antimikrobiellen Films oder Überzugs nach Anspruch 14, **dadurch gekennzeichnet, dass** es mindestens einen Schritt (a) des Applizierens einer in einem der Ansprüche 9 bis 13 definierten Zusammensetzung auf wässrigem Weg auf die Oberfläche eines Substrats und einen Schritt (b) des zum Verdunsten des oder der wässrigen Lösungsmittel geeigneten Trocknens umfasst, wobei die Zusammensetzung im Schritt (a) insbesondere durch Tauchbeschichten, Spritzbeschichten, Spin Coating, Sprühbeschichten, Tintenstrahlbeschichten, Rotationsbeschichten, Schlitzdüsenbeschichten, Imprägnationsbeschichten, Flutbeschichten, Dip Coating oder Siebdruck, Leimpressenbeschichten, Rakelbeschichten appliziert wird.

16. Nichttherapeutisches Verfahren, das dazu dient, einem Substrat, insbesondere einem Film oder Papier, insbesondere einem celluloseartigen, antimikrobielle Eigenschaften zu verleihen, umfassend mindestens das Applizieren eines in Anspruch 14 definierten oder nach dem in Anspruch 15 definierten Verfahren erhaltenen Films oder Überzugs auf die Oberfläche des Substrats.

17. Artikel, insbesondere für die Lebensmittelindustrie, umfassend ein Substrat, das mit mindestens einem in Anspruch 14 definierten oder nach dem in Anspruch 15 definierten Verfahren erhaltenen Film oder Überzug überzogen ist, wobei das Substrat insbesondere ein Lebensmittelfilm ist, insbesondere auf Cellulosebasis.

## Claims

1. Non-therapeutic use, as antimicrobial material, of semicrystalline nano- and/or microfibrillated cellulose to which silver nanoparticles are attached, said silver nanoparticles being present in a weight amount strictly greater than 1% and strictly less than 20% relative to the total weight of said cellulose,
said material being obtaining by means of a process comprising at least one step of microwave irradiation of an aqueous dispersion of semicrystalline nano- and/or microfibrillated cellulose supplemented with at least one silver salt, in the presence of a reducing agent.

2. Use according to Claim 1, **characterized in that** the amount of silver nanoparticles is greater than or equal to 2% by weight, in particular less than or equal to 15% by weight, in particular between 2% and 10% by weight, in particular between 2% and 8% by weight and more particularly between 2% and 5% by weight, relative to the total weight of said cellulose.

3. Use according to Claim 1 or 2, **characterized in that** the silver salt is silver nitrate (AgNO₃).

4. Use according to any one of the preceding claims, **characterized in that** the reducing agent is chosen from hydrazine, N,N-diethylhydroxylamine, urea, thiourea and mixtures thereof.

5. Use according to any one of the preceding claims, **characterized in that** the aqueous dispersion used for preparing said antimicrobial material comprises a content of semicrystalline nano- and/or microfibrillated cellulose of between 1% and 5% by weight, in particular between 2% and 4% by weight and more particularly between 2% and 3% by weight, relative to the total weight of the aqueous dispersion.

6. Use according to any one of the preceding claims, **characterized in that** the process for preparing the semicrystalline nano- and/or microfibrillated cellulose to which silver nanoparticles are attached comprises at least the steps consisting in:
(i) providing an aqueous dispersion of semicrystalline nano- and/or microfibrillated cellulose;
(ii) adding at least one silver salt with stirring until said silver salt has totally dissolved;
(iii) adding a reducing agent to the mixture thus obtained; and
(iv) subjecting said mixture to microwave irradiation under conditions conducive to the attachment of said silver nanoparticles to the nano- and/or microfibrillated cellulose.

7. Use according to any one of the preceding claims, **characterized in that** the microwave irradiation has energy of between 200 and 1000 W, in particular between 350 and 850 W, for example between 500 and 750 W.

8. Use according to any one of the preceding claims, **characterized in that** said semicrystalline nano- and/or microfibrillated cellulose to which silver nanoparticles are attached forms all or part of an antimicrobial film or coating, in particular at the surface of a substrate, said substrate being in particular a film, in particular of cellulose-based nature.

9. Antimicrobial composition comprising at least:
- semicrystalline nano- and/or microfibrillated cellulose to which silver nanoparticles are attached in a weight amount strictly greater than 1% and strictly less than 20% relative to the total weight of said cellulose, obtained according to the process defined according to any one of Claims 1 to 7; and
- at least one compound, termed mechanical reinforcement, capable of improving the mechanical properties of a coating formed from said composition.

10. Composition according to the preceding claim, in which said mechanical reinforcement(s) is (are) chosen from polymer nanoparticles such as nanoparticles of natural or synthetic latex, polyvinylpyrrolidone (PVP), polyvinyl alcohol (PVA), and mixtures thereof.

11. Composition according to Claim 9 or 10, in which said mechanical reinforcement(s) is (are) present in a content of between 0.5% and 5% by weight relative to the total dry weight of antimicrobial composition.

12. Composition according to any one of Claims 9 to 11, **characterized in that** it also comprises one or more surfactant(s), in particular non-ionic surfactant(s), more particularly chosen from polyoxyethylene sorbitan monooleate, polyoxyethylene sorbitan monolaurate, octoxinol 10, polyethylene-polypropylene glycol, n-dodecyl-β-D-maltoside (DDM), 3-[(3-cholamidopropyl)dimethylammonio]-1-propanesulfonate and mixtures thereof, in particular octoxinol 10.

13. Composition according to any one of Claims 9 to 12, **characterized in that** it is in liquid form, said composition comprising in particular one or more aqueous solvents, or in solid form.

14. Antimicrobial film or coating formed from a composition as defined according to any one of Claims 9 to 13, said film having in particular a thickness of between 1 and 500 µm, in particular between 10 and 100 µm and more particularly between 50 and 100 µm.

15. Process for preparing an antimicrobial film or coating as defined according to Claim 14, **characterized in that** it comprises at least one step (a) of applying, via the aqueous route, a composition as defined according to any one of Claims 9 to 13 to the surface of a substrate, and a drying step (b) suitable for evaporating off said aqueous solvent(s), said composition being more particularly applied in step (a) by dip-coating, by spraying, spin depositing, spray-coating, inkjet coating, spin-coating, slot die coating, coating by impregnation, flow-coating, depositing by dipping or by screen printing, depositing by size-press, bar-coating.

16. Non-therapeutic process that is of use for conferring antimicrobial properties on a substrate, in particular a film or paper, in particular of cellulose-based nature, comprising at least the application, at the surface of said substrate, of a film or coating as defined according to Claim 14 or as obtained according to the process as defined in Claim 15.

17. Article, in particular for food-processing, comprising a substrate coated with at least one antimicrobial film or coating as defined according to Claim 14 or as obtained according to the process defined in Claim 15, said substrate being more particularly a food film, in particular based on cellulose.
